# EUROPEAN PATENT SPECIFICATION

(11) **EP 3 905 735 B1**
(45) Date of publication and mention of the grant of the patent: **30.04.2025**
(21) Application number: 21156601.3
(22) Date of filing: 11.02.2021
(51) Int. Cl.: H04W 4/80, B60R 1/00, H04W 88/10

(54) **ADVERTISING INTERCONNECTION SYSTEM FOR HUB ROTATION IMAGING**
WERBEVERBINDUNGSSYSTEM FÜR NABENROTATIONSABBILDUNG
SYSTÈME D'INTERCONNEXION PUBLICITAIRE POUR L'IMAGERIE DE ROTATION DE MOYEU

(30) Priority: 28.04.2020 CN 202010348378
(43) Date of publication of application: 03.11.2021
(73) Proprietor: Citic Dicastal Co., Ltd., Quinhuangdao Heibei 066011 (CN)
(72) Inventor: LI, Minglei, Qinhuangdao Heibei 066011 (CN); XU, Shiwen, Qinhuangdao Heibei 066011 (CN); DAI, Yao, Qinhuangdao Heibei 066011 (CN); WANG, Shaoqian, Qinhuangdao Heibei 066011 (CN); LIU, Weidong, Qinhuangdao Heibei 066011 (CN); LI, Xi, Qinhuangdao Heibei 066011 (CN)
(74) Representative: Gong, Jinping

(56) References cited:
- EP-A2- 2 572 553
- CN-A- 110 364 097
- US-A1- 2019 050 696
- US-A1- 2021 035 160
- JIACHUN ZHENG ET AL: "An A-to-N mark monitoring system based on wireless sensor network", POSITION LOCATION AND NAVIGATION SYMPOSIUM (PLANS), 2010 IEEE/ION, IEEE, PISCATAWAY, NJ, USA, 4 May 2010 (2010-05-04), pages 880 - 887, XP031706968, ISBN: 978-1-4244-5036-7

## Description

### Field of the Invention

The present invention relates to the field of vehicles, and specifically to an advertising interconnection system for hub rotation imaging.

### Background of the Invention

In an intelligent advertising system based on rotation imaging of a hub, a hub rotation imaging apparatus mounted on the hub needs to receive data and control instructions issued by an advertising system control platform, and performs corresponding display. Therefore, how to realize advertising interconnection of hub imaging becomes a problem to be urgently solved. CN 110 364 097 A relates to a wheel rotation imaging device and a wheel rotation imaging intelligent advertising system, with which texts, images and videos can be displayed.

### Summary of the Invention

In view of this, the present invention aims to propose an advertising interconnection system for hub rotation imaging, as specified in any one of claims 1 to 5, which can efficiently and practically realize advertising interconnection of hub imaging, and meet multiple practical needs.

### Brief Description of the Drawing

The accompanying drawing constituting a part of the present invention is used for providing a further understanding of the present invention, and the schematic embodiments of the present invention and the descriptions thereof are used for interpreting the present invention, rather than constituting improper limitations to the present invention. In the drawing:

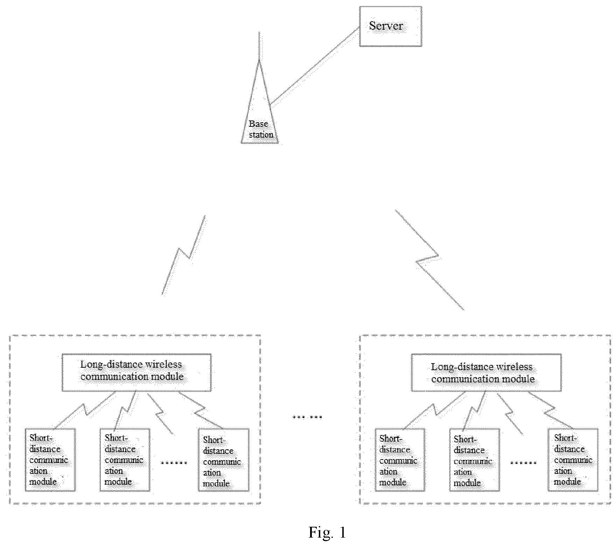

Fig. 1 is a schematic diagram of an advertising interconnection system for hub rotation imaging according to the present invention.

### Detailed Description of Embodiments

It should be noted that the embodiments in the present invention and the features in the embodiments can be combined with each other without conflicts.

The technical solutions of the present invention will be described clearly and completely with reference to the accompanying drawing and in combination with the embodiments. Apparently, the described embodiments are part of, not all of, the embodiments of the present invention. Based on the embodiments of the present invention, all other embodiments obtained by those of ordinary skill in the art without any creative effort shall fall within the protection scope of the present invention.

In advertising interconnection system for hub rotation imaging according to an embodiment of the present invention will be described with reference to Fig. 1 and in conjunction with the embodiments.

An advertising interconnection system for hub rotation imaging mainly comprises a server, a base station, and a communication module installed on a vehicle hub.

The communication module comprises a long-distance wireless communication module and a low-power short-distance communication module. In particular, in terms of a vehicle, a long-distance wireless communication module is installed on at least one hub of each vehicle, a low-power short-distance communication module is installed on each hub of each vehicle, and each communication module is driven by a processor unit. The long-distance wireless communication module of each vehicle establishes a connection with the server through the base station to receive instructions and exchanges data. The low-power short-distance communication module on the hub where the long-distance wireless communication module of each vehicle is located establishes a connection with the low-power short-distance communication module on each remaining hub of the vehicle to exchange data.

The server can receive various sensor data uploaded by the communication module of each vehicle, and infer data such as driving information and location information of the vehicle; the server can also issue single or multiple instructions/transfer files to the communication module of each vehicle individually or in batches; and the server can also simultaneously issue the same instruction or file to the communication modules of multiple vehicles.

In some embodiments, an advertising interconnection system for hub rotation imaging, referring to Fig. 1, comprises a network server, a base station, and a vehicle installed with at least one long-distance wireless communication module.

Several hubs of each vehicle form a set of nodes, a long-distance wireless communication module and a low-power short-distance communication module are installed on one of the hubs, and only low-power short-distance communication modules are installed on the remaining hubs. Taking a vehicle installed with four wheels as an example, the four wheels are a set of nodes, and thee of the hubs are set as slaves equipped with low-power short-distance communication modules, such as Bluetooth communication modules, and ZigBee (a wireless network protocol for low-speed and short-distance transmission); the other hub is set as the host, which is equipped with a short-distance communication module (such as Bluetooth, or ZigBee) and a long-distance wireless communication module, such as a general ground mobile 3G/4G/5G/NB-IoT communication module; and the low-power short-distance communication modules and the long-distance wireless communication module are driven by a processor unit, such as an ARM (Advanced RISC Machines, a 32-bit reduced instruction set processor architecture) kernel single-chip microcomputer and the like with the function of driving the low-power short-distance communication modules and the long-distance wireless communication module. In the set of nodes of this vehicle, the host and the other three slaves communicate and interact through respective low-power short-distance communication modules. The host is responsible for collecting various data or demand information that each slave needs to report to the server, such as sensor data of the hubs, and distribute the data or instructions obtained from the server to each slave. The host in the set of nodes communicates with the base station through the long-distance wireless communication module, establishes a connection with the server, reports the information of the host itself and the information collected from each slave to the server, and acquires data information or instruction information issued by the server.

The server on the network side establishes a connection with the long-distance wireless communication module of the host of each vehicle through the base station to collect data information and issue data and instruction information. The server can obtain the sensor information of the hubs, and calculate the running status and geographic location of the hubs, and the like. According to actual needs, the server can send instructions and transfer files to the hubs in batches. The instructions and files can be single or multiple. The server can also simultaneously issue the same instructions/files to multiple sets of nodes.

The server can automatically control the multiple sets of nodes according to system settings, for example, set the hubs of each vehicle in a designated area to play the same video content at the same time; or set all of the hubs of vehicles on a highway to display notification content at the same time, and the like.

In some embodiments, one or more slaves in a vehicle can also be set as a backup host, especially in a vehicle scenario such as a heavy-duty truck, a proper amount of backup can ensure the reliability of the Internet-of-vehicles system. The backup host is the same as the host, equipped with a low-power short-distance communication module and a long-distance wireless communication module. When the host is normal, the backup host works in a slave mode. Like other slaves, the backup host reports sensor data to the host through the low-power short-distance communication module thereof, and receives distributed data and instructions from the host, and the like.

When the host in the set of nodes of the vehicle fails to perform host functions, the backup host is switched to a host mode and becomes a new host which establishes a communication connection with the network side, reports data and receives data instructions and the like by the long-distance wireless communication module thereof; and collects data from each slave and distributes data instructions to each slave by the low-power short-distance communication module thereof.

Host failures are roughly divided into two levels, wherein the second-level failure is that the long-distance wireless communication module fails and cannot communicate. At this time, the original host is switched to work in the slave mode, and communicates with the new host through its short-distance communication module and the first-level failure is that both the long-distance wireless communication module and the low-power short-distance communication module fail and cannot communicate normally. At this time, the communication function of the original host is down, and the new host reports the status of the first-level failure of the original host to the server through the long-distance wireless communication module.

When the original host that fails is restored, the new host and the original host can determine, by means of a negotiation mechanism, whether to maintain the current working state, restore to the original working state, or restore to the original working state after a certain time.

When the original host that fails is restored, the original host can also report the failure restoration to the server through its long-distance wireless communication module, and then the server determines which node (the original host or the current host) in the set of nodes serves as next host.

In some embodiments, one or more slaves in a vehicle are set as a backup host(s). The backup host is the same as the host, equipped with a low-power short-range communication module and a long-range wireless communication module. The switching between the host and the backup host is no longer on the basis of whether the current host fails, the server sets the specific working mechanism of the main/backup host, and directs the switching of working modes of the current host and the backup host through the issuance of instructions.

This embodiment can enhance the system reliability of the Internet of vehicles.

The configurations of the above embodiments can be flexibly arranged according to the emphasis of actual applications to meet different practical needs.

Compared with the prior art, the advertising interconnection system for hub rotation imaging according to the present invention has the following advantages:
The advertising interconnection system for hub rotation imaging according to the present invention reduces energy consumption by arranging a communication module combining a low-power short-distance communication module and a long-distance wireless communication module on a hub, and establishes communication connections between adjacent hubs and between a hub and a server, which can efficiently and practically realize advertising interconnection of hub imaging and meet multiple practical needs.

In addition, the hub nodes are simplified, and the nodes on each vehicle are controlled hierarchically. The network server acquires information of a single node, controls data of the single node, controls multiple nodes in batches, and automatically controls the set of nodes according to internal logics.

In the description of the present invention, it should be understood that the terms "center", "longitudinal", "transverse", "front", "rear", "left", "right", "vertical", "horizontal", "top", "bottom", "inner", "outer", and the like indicate orientations or positional relationships based on the drawings. The terms are only for description convenience of the present invention and simplification of the description, but do not indicate or imply that the pointed apparatuses or elements must have specific orientations or be constructed and operated in specific orientations. Therefore, the terms should not be understood to limit the present invention.

Furthermore, the terms "first" and "second" are only for the sake of description, and cannot be understood as indicating or implying the relative importance or implicitly indicating the quantity of the indicated technical features. Thus, the features defined with "first" and "second" may explicitly or implicitly comprise one or more of these features. In the description of the present invention, "a plurality of" means at least two, e.g., two, three, etc., unless otherwise specified.

In the present invention, unless otherwise specified and defined, the terms "mounted", "joined", "connected", "fixed" and the like should be understood in a broad sense, for example, being fixedly connected, detachably connected, integrated; mechanically connected, electrically connected, mutually communicated; directly connected, indirectly connected by a medium, communication of interiors of two components or interaction of two components. A person of ordinary skill in the art could understand the specific meanings of the above terms in the present invention according to specific circumstances.

The foregoing descriptions are merely preferred embodiments of the present invention, but are not intended to limit the present invention.

## Claims

1. An advertising interconnection system for wheel hub rotation imaging, comprising a server, a wheel hub rotation imaging apparatus mounted on wheel hubs of a vehicle and a communication module mounted on the wheel hubs and connected to the wheel hub rotation imaging apparatus;
the communication module comprises a low-power short-distance communication module that is configured to communicate between adjacent wheel hubs, and a long-distance wireless communication module which is installed on at least one wheel hub, and is configured to communicate with the low-power short-distance communication module and to establish a communication connection with a server through a base station,
**characterized in that** several wheel hubs of the vehicle form a set of nodes, a long-distance wireless communication module and a low-power short-distance communication module are installed on one of the wheel hubs, which is configured as host, and low-power short-distance communication modules are installed on the remaining wheel hubs, which are configured as slaves,
wherein the host and the slaves are configured to communicate and interact through respective low-power short-distance communication modules, wherein the host is responsible for collecting various data or demand information that each slave needs to report to the server, and for distributing the data or instructions obtained from the server to each slave,
wherein the host in the set of nodes is configured to communicate with the base station through the long-distance wireless communication module, to establish a connection with the server, and
wherein the communication module comprises a processor unit, which is configured to drive the long-distance wireless communication module and the low-power short-distance communication module to communicate,
wherein one or more slaves in the vehicle is set as a backup host, the backup host is the same as the host, equipped with a low-power short-distance communication module and a long-distance wireless communication module, wherein the server is configured to set the specific working mechanism of the main/backup host, and to direct the switching of working modes of the current host and the backup host through the issuance of instructions.

2. The advertising interconnection system for wheel hub rotation imaging according to claim 1, **characterized in that** the long-distance wireless communication module is configured to receive instructions issued by the server through the base station.

3. The advertising interconnection system for wheel hub rotation imaging according to claim 1, **characterized in that** the long-distance wireless communication module is configured to exchange data with the server through the base station.

4. The advertising interconnection system for wheel hub rotation imaging according to claim 1, **characterized in that** the communication module is configured to transmit data monitored by the wheel hub rotation imaging apparatus to the server.

5. The advertising interconnection system for wheel hub rotation imaging according to claim 4, **characterized in that** the server is configured to determine driving information and location information of a vehicle, and to issue the instructions and/or transfer files to the communication module.

## Patentansprüche

1. Werbeverbindungssystem für Radnabenrotationsabbildung, umfassend einen Server, ein an Radnaben eines Fahrzeugs montiertes Radnabenrotationsabbildungsgerät und einen an den Radnaben montierten und mit dem Radnabenrotationsabbildungsgerät verbundenen Kommunikationsmodul;
wobei das Kommunikationsmodul ein Kurzstreckenkommunikationsmodul von geringer Leistung, das für die Kommunikation zwischen benachbarten Radnaben konfiguriert ist, und ein Drahtlos-Langstreckenkommunikationsmodul, das an mindestens einer Radnabe installiert ist und für eine Kommunikation mit dem Kurzstreckenkommunikationsmodul von geringer Leistung und eine Herstellung einer Kommunikationsverbindung mit einem Server über eine Basisstation konfiguriert ist, umfasst,
**dadurch gekennzeichnet, dass** mehrere Radnaben des Fahrzeugs einen Satz von Knoten bilden, ein Drahtlos-Langstreckenkommunikationsmodul und ein Kurzstreckenkommunikationsmodul von geringer Leistung an einer der Radnaben installiert sind, die als Host konfiguriert ist, und Kurzstreckenkommunikationsmodule von geringer Leistung an den verbleibenden Radnaben installiert sind, die als Slaves konfiguriert sind,
wobei der Host und die Slaves für eine Kommunikation und Interaktion über jeweilige Kurzstreckenkommunikationsmodule von geringer Leistung konfiguriert sind, wobei der Host für das Sammeln verschiedener Daten oder Anforderungsinformation, die jeder Slave an den Server melden muss, und für eine Verteilung der vom Server erhaltenen Daten oder Anweisungen an jeden Slave verantwortlich ist,
wobei der Host in dem Satz von Knoten für eine Kommunikation mit der Basisstation über das Drahtlos-Langstreckenkommunikationsmodul konfiguriert ist, um eine Verbindung mit dem Server herzustellen, und
wobei das Kommunikationsmodul eine Prozessoreinheit umfasst, die dazu konfiguriert ist, das Drahtlos-Langstreckenkommunikationsmodul und das Kurzstreckenkommunikationsmodul von geringer Leistung zur Kommunikation anzutreiben,
wobei ein oder mehrere Slaves im Fahrzeug als Backup-Host vorgesehen sind, der Backup-Host derselbe wie der Host ist und mit einem Kurzstreckenkommunikationsmodul von geringer Leistung und einem Drahtlos-Langstreckenkommunikationsmodul ausgestattet ist, wobei der Server dazu konfiguriert ist, den spezifischen Arbeitsmechanismus des Haupt-/Backup-Hosts einzustellen und das Umschalten der Arbeitsmodi des aktuellen Hosts und des Backup-Hosts durch die Ausgabe von Anweisungen zu steuern.

2. Werbeverbindungssystem für Radnabenrotationsabbildung gemäß Anspruch 1, **dadurch gekennzeichnet, dass** das Drahtlos-Langstreckenkommunikationsmodul dazu konfiguriert ist, vom Server ausgegebene Anweisungen über die Basisstation zu empfangen.

3. Werbeverbindungssystem für Radnabenrotationsabbildung gemäß Anspruch 1, **dadurch gekennzeichnet, dass** das Drahtlos-Langstreckenkommunikationsmodul dazu konfiguriert ist, Daten mit dem Server über die Basisstation auszutauschen.

4. Werbeverbindungssystem für Radnabenrotationsabbildung gemäß Anspruch 1, **dadurch gekennzeichnet, dass** das Kommunikationsmodul dazu konfiguriert ist, vom Radnabenrotationsabbildungsgerät überwachte Daten an den Server zu übertragen.

5. Werbeverbindungssystem für Radnabenrotationsabbildung gemäß Anspruch 4, **dadurch gekennzeichnet, dass** der Server dazu konfiguriert ist, Fahrinformationen und Standortinformationen eines Fahrzeugs zu ermitteln, und die Anweisungen auszugeben und/oder Dateien an das Kommunikationsmodul zu übertragen.

## Revendications

1. Un système d'interconnexion publicitaire pour l'imagerie de rotation de moyeu de roue, comprenant un sévier, un appareil d'imagerie de rotation de moyeu de roue monté sur les moyeux de roue d'un véhicule et un module de communication monté sur les moyeux de roue et relié à l'appareil d'imagerie de rotation de moyeu de roue;
le module de communication comprend un module de communication courte distance de faible puissance configuré pour communiquer entre des moyeux de roue adjacents, et un module de communication sans fil longue distance installé sur au moins un moyeu de roue et configuré pour communiquer avec le module de communication courte distance de faible puissance et pour établir une connexion de communication avec un serveur par l'intermédiaire d'une station de base,
caractérisé en ce sens que plusieurs moyeux de roue du véhicule forment un ensemble de nœuds, un module de communication sans fil longue distance et un module de communication courte distance de faible puissance sont installés sur l'un des moyeux de roue, qui est configuré en tant qu 'hôte, et des modules de communication courte distance de faible puissance sont installés sur les autres moyeux de roue, qui sont configurés en tant qu' esclaves,
dans lequel l'hôte et les esclaves sont configurés pour communiquer et interagir via des modules de communication à courte distance de faible puissance respectifs, dans lequel l'hôte est responsable de la collecte de diverses données ou informations de demande que chaque esclave doit signaler au serveur, et de la distribution des données ou des instructions obtenues du serveur à chaque esclave,
dans lequel l'hôte de l'ensemble de nœuds est configuré pour communiquer avec la station de base par le biais du module de communication sans fil longue distance, afin d'établir une connexion avec le serveur, et
dans lequel le module de communication comprend une unité de processeur, qui est configurée pour entraîner le module de communication sans fil longue distance et le module de communication courte distance de faible puissance pour communiquer,
dans laquelle un ou plusieurs esclaves dans le véhicule sont définis comme hôte de secours, l'hôte de secours est identique à l'hôte, équipé d'un module de communication à courte distance de faible puissance et d'un module de communication sans fil à longue distance, dans lequel le serveur est configuré pour définir le mécanisme de fonctionnement spécifique de l'hôte principal/de secours, et de diriger la commutation des modes de travail de l'hôte actuel et de l'hôte de sauvegarde par l'émission d'instructions.

2. Système d'interconnexion publicitaire pour l'imagerie de rotation du moyeu de roue selon la revendication 1, **caractérisé en ce que** le module de communication sans fil longue distance est configuré pour recevoir des instructions émises par le serveur via la station de base.

3. Système d'interconnexion publicitaire pour l'imagerie de rotation du moyeu de roue selon la revendication 1, **caractérisé en ce que** le module de communication sans fil longue distance est configuré pour échanger des données avec le serveur par l'intermédiaire de la station de base.

4. Système d'interconnexion publicitaire pour l'imagerie de rotation du moyeu de roue selon la revendication 1, **caractérisé en ce que** le module de communication est configuré pour transmettre au serveur les données surveillées par l'appareil d'imagerie de rotation du moyeu de roue.

5. Système d'interconnexion publicitaire pour l'imagerie de rotation du moyeu de roue selon la revendication 4, **caractérisé en ce que** le serveur est configuré pour déterminer les informations de conduite et les informations de localisation d'un véhicule, et pour émettre les instructions et/ou transférer des fichiers au module de communication.
